# EUROPEAN PATENT APPLICATION

(11) **EP 2 199 789 A1**
(43) Date of publication of application: **23.06.2010**
(21) Application number: 09178986.7
(22) Date of filing: 11.12.2009
(51) Int. Cl.: G01N 31/22

(54) **Method and system for producing a gas-sensitive substrate**

(30) Priority: 17.12.2008 US 138414 P; 08.12.2009 US 633143; 17.12.2008 US 138419 P
(71) Applicant: Honeywell International Inc., Morristown, NJ 07962 (US)
(72) Inventor: Mcbrady, Adam D., Morristown, NJ 07962-2245 (US); Rivera, Nelson, Morristown, NJ 07962-2245 (US); Hogan, Patrick, Morristown, NJ 07962-2245 (US); Fazzio R, Shane, Morristown, NJ 07962-2245 (US); Yamaguchi, Takashi, Morristown, NJ 07962-2245 (US); Yamaguchi, Tamami, Morristown, NJ 07962-2245 (US)
(74) Representative: Buckley, Guy Julian

(57) **Abstract**

A method includes forming a gas-sensitive substrate (102, 102a-102c) during a production process by dispensing (708) one or more gas-sensitive materials onto the substrate and drying (712) the one or more gas-sensitive materials on the substrate. The method also includes adjusting (720) the production process based on one or more sensor measurements associated with the substrate and/or the production process. Adjusting the production process could include conditioning (706, 710, 716) air around the substrate so that the conditioned air has one or more specified characteristics and adjusting (720) the one or more specified characteristics based on the one or more sensor measurements. The one or more sensor measurements could include one or more measurements of a moisture content of the substrate. Adjusting the production process could also include adjusting (720) a tension of the substrate. The one or more gas-sensitive materials could be deposited in multiple regions (202-206, 302-306, 402-408, 510a-510d) of the substrate, such as along multiple tracks extending lengthwise down the substrate.

## Description

### CROSS-REFERENCE TO RELATED APPLICATIONS

This application claims priority under 35 U.S.C. § 119(e) to:
U.S. Provisional Patent Application No. 61/138,414 filed on December 17, 2008; and
U.S. Provisional Patent Application No. 61/138,419 filed on December 17, 2008;
both of which are hereby incorporated by reference.

This application is related to U.S. Patent Application No. 12/058,979 filed on March 31, 2008, which is also hereby incorporated by reference.

### TECHNICAL FIELD

This disclosure relates generally to gas sensing and more specifically to a method and system for producing a gas-sensitive substrate.

### BACKGROUND

It is often necessary or desirable to monitor the gases present in an environment, such as to detect the presence and/or concentration of toxic gases in a specified area. One manner in which this is typically done uses paper tapes carrying gas-responsive or gas-sensitive materials. During use, gas being sampled is typically pulled through or otherwise made to come in contact with a conventional paper tape. If a specified gas is present, the gas-responsive or gas-sensitive material sensitive to that gas causes a color change to occur in the paper tape. The color change can be detected via any number of optical measurements, and the color change can be calibrated to correspond to a concentration of the specified gas.

Conventional processes for producing gas-sensitive paper tapes often result in rolls of tape with a gas-sensitive chemical reagent impregnated across the entire width of the tape. For example, one conventional process involves unwinding a roll of paper tape, submerging the tape in a bath of gas-sensitive dye, drying the tape, and re-winding the roll of tape. However, conventional processes can suffer from poor yields, meaning the finished tapes fail to meet quality assurance tests at a high or excessive rate. Moreover, conventional production processes do not easily lend themselves to making substrates sensitive to multiple gases.

### SUMMARY

This disclosure provides a method and system for producing a gas-sensitive substrate.

In a first representative embodiment, a method includes forming a gas-sensitive substrate during a production process by dispensing one or more gas-sensitive materials onto the substrate and drying the one or more gas-sensitive materials on the substrate. The method also includes adjusting the production process based on one or more sensor measurements associated with at least one of the substrate and the production process.

In a second representative embodiment, a system includes production equipment configured to form a gas-sensitive substrate during a production process. The system also includes at least one controlled chamber configured to condition air used during the production process so that the conditioned air has one or more specified characteristics.

In a third representative embodiment, an apparatus includes an interface configured to receive (i) measurements of one or more properties associated with a gas-sensitive substrate being produced during a production process and/or (ii) measurements of one or more properties associated with the production process. The apparatus also includes a processing device configured to adjust the production process based on the measurements.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:

FIGURE 1 illustrates an example system for producing a gas-sensitive substrate according to this disclosure;

FIGURES 2 through 4 illustrate example gas-sensitive substrates according to this disclosure;

FIGURES 5 and 6 illustrate example dispensing units for dispensing gas-sensitive material onto a substrate according to this disclosure; and

FIGURE 7 illustrates an example method for producing a gas-sensitive substrate according to this disclosure.

### DETAILED DESCRIPTION

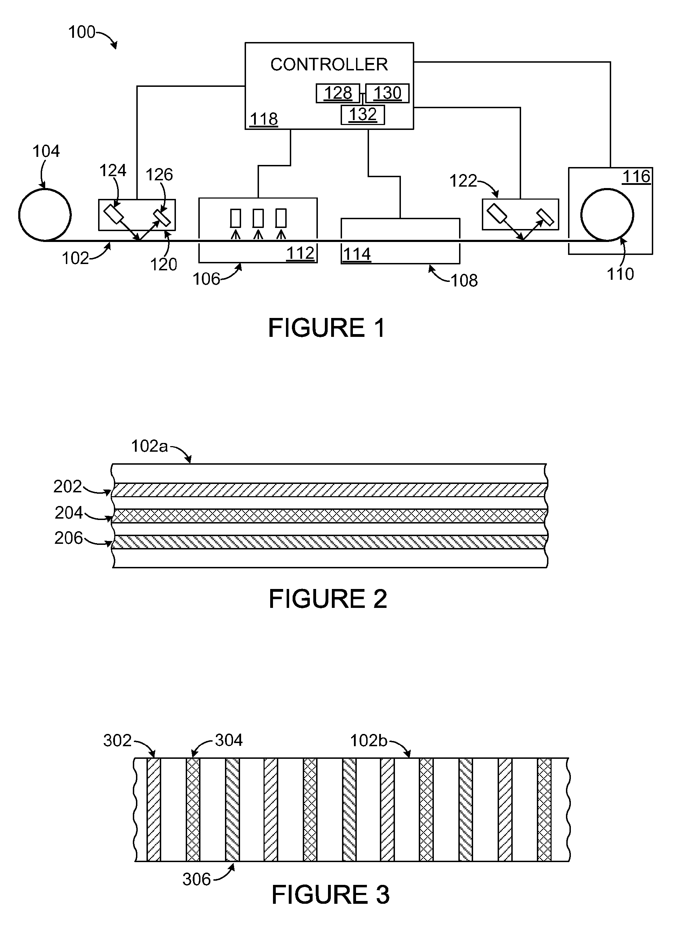

FIGURES 1 through 7, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

FIGURE 1 illustrates an example system 100 for producing a gas-sensitive substrate according to this disclosure. As shown in FIGURE 1, a substrate 102 is unwound from a first reel 104, and one or more gas-sensitive materials are deposited on the substrate 102 by a dispensing unit 106. The substrate 102 then enters a dryer unit 108, which dries the one or more gas-sensitive materials on the substrate 102. The substrate 102 is then re-wound onto a second reel 110.

The substrate 102 includes any suitable material that can receive and retain gas-sensitive material, such as a paper or plastic tape. A gas-sensitive material includes any suitable material, such as a chemical reagent, that can change color or otherwise provide an indication that one or more specified gases or gas families are present. A gas-sensitive material typically provides an indication of the concentration of one or more specified gases or gas families. The reels 104 and 110 include any suitable structures around which a substrate can be wound. However, the substrate 102 need not be wound around the reels 104 and 110 and could instead be folded or otherwise collected in any other suitable manner. The dispensing unit 106 includes any suitable structure for dispensing one or more gas-sensitive materials onto a substrate. The dryer unit 108 includes any suitable structure for drying a substrate.

In this example, the system 100 also includes one or more controlled chambers. For example, the dispensing unit 106 can include a controlled chamber 112, the dryer unit 108 can include a controlled chamber 114, and the second reel 110 could operate within a controlled chamber 116. Each of the controlled chambers 112-116 can be used to control one or more characteristics of air (such as humidity, temperature, or composition) used in different portions of the system 100. In this document, the term "air" refers to any combination of one or more gases.

As noted above, one difficulty with conventional techniques for producing gas-sensitive tapes is that they are typically not high-yield processes. In accordance with this disclosure, the one or more controlled chambers 112-116 can be used to condition air used in the production process, such as by conditioning the air to a desired temperature, humidity, or composition. This can help to improve yields of the substrate 102 being produced in the system 100.

In some embodiments, at least one controlled chamber 112-116 can condition air so the air has one or more generally fixed characteristics. For example, a controlled chamber could condition air so the air has a 30% relative humidity. A controlled chamber could also condition air so the air has a generally fixed temperature or any other or additional characteristic(s). These characteristic(s) could be selected to help improve yields of the substrate 102 being produced. In these embodiments, a controller 118 could receive temperature, humidity, or other measurements from the controlled chamber and use the measurements to adjust operation of the controlled chamber so that the air being conditioned maintains the generally fixed characteristic(s).

In other embodiments, the humidity, temperature, composition, or other characteristic(s) of the air being conditioned by one or more controlled chambers 112-116 can be dynamically adjusted by the controller 118. For example, the moisture (water) content of the substrate 102 can be measured and used to control one or more of the controlled chambers 112-116. In this example, a first sensing unit 120 is positioned before the dispensing unit 106, and a second sensing unit 122 is positioned after the dryer unit 108. The sensing units 120 and 122 measure the moisture content of the substrate 102 at these positions in the system 100.

There are many rapid (and reasonably inexpensive) techniques to measure the moisture content of a substrate. For example, O-H stretch infrared light absorption is a very well-known technique, where very broad and intense infrared absorption is used as a measure of the total moisture content of a material. As shown in FIGURE 1, an infrared light source 124 illuminates the substrate 102 at a non-perpendicular incident angle, and the incident light interacts with the substrate 102. Any moisture in the substrate 102 absorbs the characteristic infrared light and prevents that light from being reflected or transmitted, and the light that is reflected or transmitted can be recorded by a light detector 126.

Note that various implementations could be used with this approach. For instance, broad light sources 124 or light sources 124 tuned to a specific O-H stretch could be used. Also, a spectrometer could be used as the light detector 126 with a broad light source 124, or a photodiode could be used as the light detector 126 with a tuned light source 124. In addition, the light source 124 and the light detector 126 could have any suitable arrangement in relation to the substrate 102 and each other (such as by being on the same side of the substrate 102 or on opposite sides of the substrate 102).

Each sensing unit 120 and 122 includes any suitable structure for measuring moisture content of a substrate. Also, other or additional sensing units could be used in the system 100, such as a sensing unit located between the dispensing unit 106 and the dryer unit 108. Further, any other suitable technique could be used to measure the moisture content of a substrate.

In these embodiments, moisture measurements from the sensing units 120 and 122 can be provided to the controller 118. The controller 118 can use these measurements to adjust one or more aspects of the production process until the moisture content of the substrate 102 has a desired value or is within a desired range of values. This supports the use of process measurement techniques for real-time feedback control during the production of gas-sensitive substrates 102. This can help to improve production yields and to improve the resulting precision and accuracy of the gas-sensitive substrates 102, meaning gas concentration measurements taken using the substrates 102 may be closer to the actual concentrations (compared to measurements taken using conventional tapes) and may also be more reproducible from analysis to analysis.

The controller 118 can use any suitable control technique for adjusting one or more aspects of the production process. For example, the controller 118 could use moisture measurements from the sensing units 120 and 122 to control how each controlled chamber 112-116 conditions outside air entering the chamber so the air has a desired temperature, humidity, composition, and/or other characteristic(s) that may impact the finished substrate's sensitivity to one or more gases or gas families. In the system 100 shown in FIGURE 1, the controller 118 could control various variables in order to control the production of the gas-sensitive substrate 102. In particular embodiments, these variables can include (but are not limited to):
- the tension of the substrate 102 (throughout the process);
- the humidity, temperature, and/or composition of air in the dispensing unit's controlled chamber 112;
- the humidity, temperature, and/or composition of air in the dryer unit's controlled chamber 114; and
- the humidity, temperature, and/or composition of air in the controlled chamber 116 around the second reel 110.
Each controlled chamber's environmental conditions can be monitored, recorded, and controlled with appropriate feedback loops or other control mechanisms.

Note that different control logic may be used in different systems 100. In some embodiments, the control logic implemented by the controller 118 in a specific system can be determined by testing the system. For instance, gas-sensitive material(s) can be deposited on the substrate 102 while varying the substrate's tension and/or while varying the humidity, temperature, composition, or other characteristic(s) in one or more controlled chambers 112-116. In this way, one or more models can be constructed that identify how one or more controlled variables (such as temperature, humidity, composition, or substrate tension) affect the moisture content of the substrate 102. These models could then be used by the controller 118 to control the production of additional gas-sensitive substrates 102.

The controller 118 includes any hardware, software, firmware, or combination thereof for controlling one or more characteristics within a system that produces a gas-sensitive substrate. The controller 118 could, for example, represent a control computer or a personal computer (PC). The controller 118 in these embodiments could include at least one processor 128, at least one memory 130 storing instructions and data, and at least one interface 132 for receiving and/or transmitting data. Each of the controlled chambers 112-116 includes any suitable structure for conditioning air to have one or more desired characteristics.

Various advantages or benefits can be obtained using the system 100 of FIGURE 1 depending on the implementation. For example, the system 100 is capable of depositing multiple regions of gas-sensitive materials on a substrate 102, and those materials could be sensitive to multiple gases or gas types. Also, as noted above, one conventional technique for producing gas-sensitive paper tape involves submerging the paper tape in a bath of gas-sensitive dye. However, the submerging bath provides a source for solvent evaporation that often needs to be sequestered and handled according to environmental protection regulations, which typically increases the cost of producing the tape. Depositing gas-sensitive material(s) as shown in FIGURE 1 can help to reduce solvent evaporation and therefore reduce production costs. Further, there are often sections of conventional paper tape that are not used during gas sensing. As a result, depositing the dye in these locations provides no value and adds cost to the production process. The system 100 may be capable of depositing gas-sensitive material(s) only on specified portions of a gas-sensitive substrate 102, meaning the production of the substrate 102 can be done with further reductions in cost.

In addition, in some embodiments, the controller 118 or other control logic can control the specific amount(s) of gas-sensitive material(s) deposited onto the substrate 102. In conventional submerging baths, there is no mechanism for adjusting the specific amount of gas-sensitive material impregnated in a paper tape. Rather, the tape simply absorbs the gas-sensitive material, and this absorption is not necessarily consistent along the length of the tape. The system 100 of FIGURE 1 can provide for the precise deposition of gas-sensitive material(s) onto the substrate 102.

Once production of the substrate 102 is complete, the substrate 102 can be used in any suitable manner. For example, the substrate 102 can be exposed to air from one or more rooms or other areas, and optical sensors or other sensors can detect color changes in the substrate 102. In this way, the substrate 102 can be used to detect the presence and/or concentration of one or more gases or gas families in one or more areas. Example systems that use gas-sensitive substrates 102 are provided in several of the patent documents incorporated by reference above.

Although FIGURE 1 illustrates one example of a system 100 for producing a gas-sensitive substrate, various changes may be made to FIGURE 1. For example, any type(s) of moisture sensor(s) and any number of moisture sensors could be used in the system 100. Also, the system 100 could include one, two, three, or more controlled chambers for conditioning air. In addition, the sensing units 120 and 122 have been described as measuring moisture content of the substrate 102, and the controller 118 has been described (in some embodiments) as modifying the production of the substrate 102 based on the moisture content measurements. In other embodiments, one or more sensing units could measure any other or additional property or properties of the substrate 102. The sensing units could also measure one or more properties of the production environment, such as the humidity within a controlled chamber. Moreover, the controller 118 could use any other or additional property or properties of the substrate 102 to modify one or more aspects of the production process.

FIGURES 2 through 4 illustrate example gas-sensitive substrates 102a-102c according to this disclosure. In particular, FIGURES 2 through 4 illustrate different ways in which one or more gas-sensitive materials can be deposited onto a substrate by the system 100 of FIGURE 1.

In FIGURE 2, a gas-sensitive substrate 102a includes multiple regions 202-206, each with one or more gas-sensitive materials. These regions 202-206 generally form tracks that extend along the length of the substrate 102a. Note that these tracks may be substantially or completely continuous down the length of the substrate 102a, and there may or may not be breaks in the tracks. Here, the regions 202-206 could be used to measure or detect up to three gases or gas families.

In FIGURE 3, a gas-sensitive substrate 102b includes multiple regions 302-306, each with one or more gas-sensitive materials, deposited substantially across the width of the substrate 102b. The regions 302-306 here have a repeating pattern along the length of the substrate 102b. Again, the width-extending regions 302-306 could be used to measure or detect up to three gases or gas families.

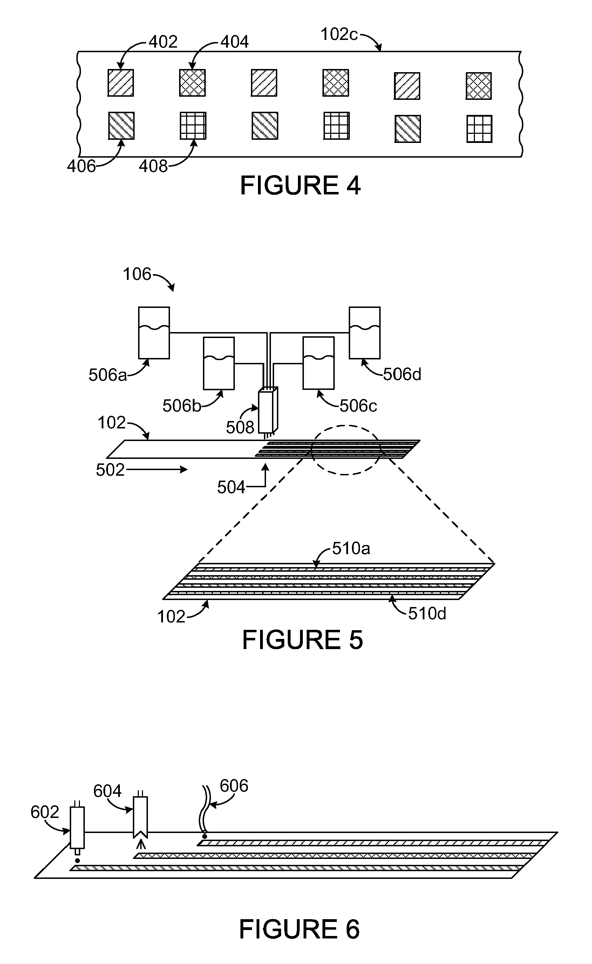

In FIGURE 4, a gas-sensitive substrate 102c includes multiple regions 402-408, each with one or more gas-sensitive materials, deposited in discrete or non-continuous areas of the substrate 102c. The discrete or non-continuous areas could represent areas having the gas-sensitive material(s) in squares, circles, dots, spots, or any other or additional shapes. Here, the non-continuous areas could be used to measure or detect up to four gases or gas families.

Any of these gas-sensitive substrates could be produced using the system 100 shown in FIGURE 1. However, the system 100 of FIGURE 1 could be used to produce any other gas-sensitive substrate having any number of gas-sensitive materials in any configuration. Moreover, in FIGURES 2 through 4, gas-sensitive materials are not deposited on the entire surface of the substrates 102a-102c. However, the system 100 of FIGURE 1 could be used to completely cover a substrate's surface with the one or more gas-sensitive materials.

Although FIGURES 2 through 4 illustrate examples of gas-sensitive substrates, various changes may be made to FIGURES 2 through 4. For example, each substrate in FIGURES 2 through 4 could include any suitable number of regions containing gas-sensitive material(s). Also, any suitable pattern(s) could be used to deposit the gas-sensitive material(s) on a substrate, and the areas where the gas-sensitive material(s) are deposited can have any shape and size. Further, gas-sensitive material(s) on each substrate could be used to sense a single gas or gas family, or gas-sensitive materials on each substrate could be used to sense multiple gases or gas families.

FIGURES 5 and 6 illustrate example dispensing units 106 for dispensing material onto a gas-sensitive substrate according to this disclosure. In general, any suitable technique could be used to deposit gas-sensitive material(s) onto one or multiple regions of a substrate.

In FIGURE 5, one or more gas-sensitive materials are deposited on a substrate 102 by the dispensing unit 106. In this example, the dispensing unit 106 extracts the substrate 102, such as from a roll, and moves it in a direction 502 past a deposition location 504. At the deposition location 504, one or more gas-sensitive materials can be applied to the substrate 102 using material from one or more reservoirs 506a-506d. The one or more gas-sensitive materials can be selectively deposited on the substrate 102 by a dispensing module 508.

In this example embodiment, the dispensing module 508 deposits the one or more gas-sensitive materials onto the substrate 102 in the form of spaced-apart, continuously extending tracks 510a-510d. The tracks 510a-510d could be sensitive to the same gas or gas family, or different tracks 510a-510d could be sensitive to different gases or gas families. Note that the number of tracks, the size of each track, and the spacings between the tracks are for illustration only. Also note that lengthwise-extending tracks need not be used here. As described above, other patterns could be formed on the substrate 102. These other patterns could include regions extending across the width of the substrate 102 or discontinuous series of spaced-apart areas that may extend in the lengthwise direction. A combination of patterns (such as continuous tracks and non-continuous dots or other areas) could also be used.

In FIGURE 5, the dispensing module 508 represents a module that can receive material(s) from one or multiple reservoirs and that can deposit the material(s) as multiple tracks onto the substrate 102. The deposition by the dispensing module 508 could be done in any suitable manner, such as by using sprayers, drop-depositing devices, or pumps. FIGURE 6 illustrates that individual devices can also be used to deposit individual tracks or other areas of gas-sensitive material(s) on a substrate. The individual devices can include drop-depositing devices 602, sprayers 604, or pump outputs 606. Again, while lengthwise-extending tracks are shown in FIGURE 6, other patterns could be formed on a substrate.

As particular examples, the drop-depositing devices 602 could include micro-solenoid valves, inkjet printers, or piezoelectric, acoustic, or thermal valves. The sprayers 604 could include aerosol or spray-based dispensing heads, and a liquid pump could be used to deliver the gas-sensitive material(s) if desired. The pump outputs 606 could represent orifices or tubes from which small volumes of gas-sensitive material(s) are pumped. An applied force (such as peristaltic, syringe, or capillary forces) could be used to deliver the gas-sensitive material(s).

Although FIGURES 5 and 6 illustrate examples of dispensing units 106 for dispensing gas-sensitive material onto a substrate, various changes may be made to FIGURES 5 and 6. For example, any other or additional type(s) of deposition unit(s) could also be used.

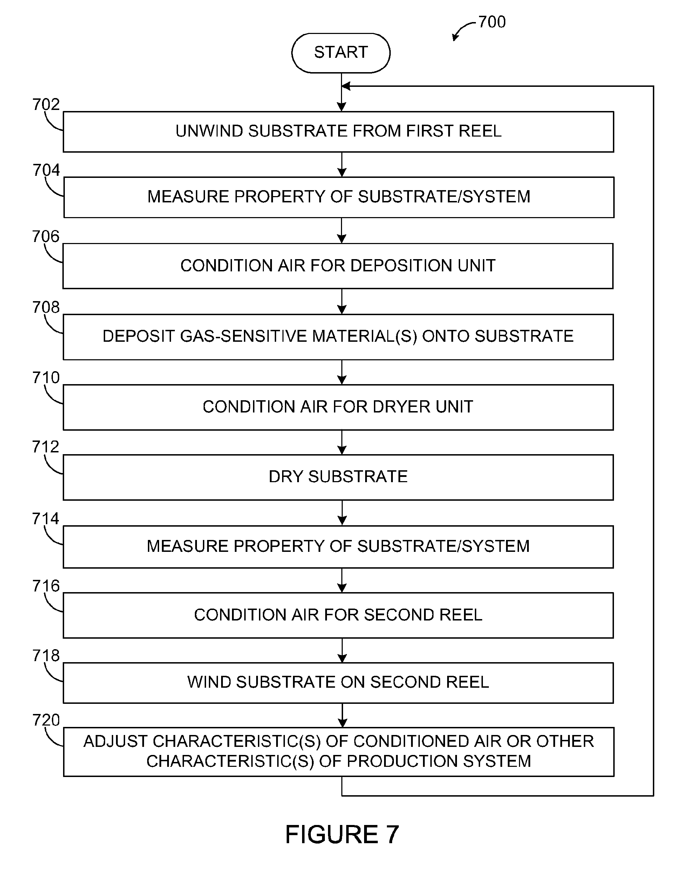

FIGURE 7 illustrates an example method 700 for producing a gas-sensitive substrate according to this disclosure. For ease of explanation, the method 700 is described with respect to the system 100 of FIGURE 1. However, the method 700 could be used with any suitable system.

A substrate is unwound from a first reel at step 702. This could include, for example, a transport mechanism or other structure causing a paper or plastic tape or other substrate 102 to unwind from the first reel 104. The moisture content or other property of the substrate or production system is measured at step 704. This could include, for example, the sensing unit 120 measuring the moisture content of the substrate 102 using O-H stretch or other suitable technique.

Air is conditioned for a deposition unit at step 706. This could include, for example, the controlled chamber 112 conditioning air to a fixed humidity, temperature, or composition. This could also include the controlled chamber 112 conditioning air to a humidity, temperature, or composition as specified by the controller 118 (which could vary over time). One or more gas-sensitive materials are deposited on the substrate by the deposition unit at step 708. This could include, for example, the deposition unit 106 depositing the gas-sensitive material(s) in tracks or other patterns.

Air is conditioned for a dryer unit at step 710. This could include, for example, the controlled chamber 114 conditioning air to a fixed humidity, temperature, or composition. This could also include the controlled chamber 114 conditioning air to a humidity, temperature, or composition as specified by the controller 118 (which could vary over time). The substrate is dried by the dryer unit at step 712. This could include, for example, the dryer unit 108 drying the gas-sensitive material(s) deposited on the substrate 102. The moisture content or other property of the substrate or production system is measured at step 714. This could include, for example, the sensing unit 122 measuring the moisture content of the substrate 102 using O-H stretch or other suitable technique.

Air is conditioned for a second reel (or other location where the dried substrate is collected) at step 716. This could include, for example, the controlled chamber 116 conditioning air to a fixed humidity, temperature, or composition. This could also include the controlled chamber 116 conditioning air to a humidity, temperature, or composition as specified by the controller 118 (which could vary over time). The substrate is wound on the second reel or otherwise collected at step 718.

One or more characteristics of the conditioned air or the production system can be adjusted at step 720. For example, the controller 118 could alter the temperature, humidity, or composition of air in any of the controlled chambers 112-116 in an attempt to bring the moisture content or other property of the substrate 102 to a specific value or within a specific range. The controller 118 could also adjust the tension of the substrate 102 or take any other or additional action(s) based on the moisture content or other property of the substrate 102. The controller 118 could further adjust one or more characteristics of the system based on temperature, humidity, or other measurements from one or more controlled chambers.

Although FIGURE 7 illustrates one example of a method 700 for producing a gas-sensitive substrate, various changes may be made to FIGURE 7. For example, air could be conditioned at any number of locations in the production process, so the method 700 could involve the use of less than three or more than three controlled chambers. Also, moisture content or other property/properties could be measured at any number of locations in the production process, so the method 700 could involve the use of less than two or more than two sensors. In addition, while shown as a series of steps, various steps in FIGURE 7 could overlap, occur in parallel, occur in a different order, or occur multiple times. For instance, step 720 could occur in parallel with steps 702-718.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

It may be advantageous to set forth definitions of certain words and phrases used throughout this patent document. The terms "include" and "comprise," as well as derivatives thereof, mean inclusion without limitation. The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. The term "controller" means any device, system, or part thereof that controls at least one operation. A controller may be implemented in hardware, firmware, software, or some combination of at least two of the same. The functionality associated with any particular controller may be centralized or distributed, whether locally or remotely.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method comprising:
forming a gas-sensitive substrate (102, 102a-102c) during a production process by dispensing (708) one or more gas-sensitive materials onto the substrate and drying (712) the one or more gas-sensitive materials on the substrate; and
adjusting (720) the production process based on one or more sensor measurements associated with at least one of the substrate and the production process.

2. The method of Claim 1, wherein adjusting the production process comprises:
conditioning (706, 710, 716) air around the substrate so that the conditioned air has one or more specified characteristics; and
adjusting (720) the one or more specified characteristics of the conditioned air based on the one or more sensor measurements.

3. The method of Claim 2, wherein adjusting the one or more specified characteristics of the conditioned air comprises at least one of:
adjusting at least one of a first humidity, a first temperature, and a first composition of air within a first controlled chamber (112) in which the one or more gas-sensitive materials are dispensed onto the substrate;
adjusting at least one of a second humidity, a second temperature, and a second composition of air within a second controlled chamber (114) in which the one or more gas-sensitive materials are dried; and
adjusting at least one of a third humidity, a third temperature, and a third composition of air within a third controlled chamber (116) in which the substrate is collected after the drying.

4. The method of Claim 1, wherein adjusting the production process comprises conditioning air around the substrate so that the air has at least one of a fixed humidity, a fixed temperature, and a fixed composition.

5. The method of Claim 1, wherein adjusting the production process comprises adjusting a tension of the substrate.

6. The method of Claim 1, wherein dispensing the one or more gas-sensitive materials onto the substrate comprises depositing the one or more gas-sensitive materials along multiple tracks (202-206, 510a-510d) extending lengthwise down the substrate.

7. The method of Claim 1, wherein dispensing the one or more gas-sensitive materials onto the substrate comprises depositing the one or more gas-sensitive materials at discrete locations (402-408) of the substrate.

8. A system comprising:
production equipment (106-108) configured to form a gas-sensitive substrate (102, 102a-102c) during a production process; and
at least one controlled chamber (112-116) configured to condition air used during the production process so that the conditioned air has one or more specified characteristics.

9. The system of Claim 8, further comprising:
at least one sensor (120-122) configured to generate one or more sensor measurements associated with at least one of the substrate and the production process; and
a controller (118) configured to adjust operation of the at least one controlled chamber based on the one or more sensor measurements.

10. The system of Claim 9, wherein the at least one sensor comprises at least one moisture sensor configured to measure a moisture content of the substrate.

11. An apparatus comprising:
an interface (132) configured to receive at least one of: (i) measurements of one or more properties associated with a gas-sensitive substrate (102, 102a-102c) being produced during a production process and (ii) measurements of one or more properties associated with the production process; and
a processing device (128) configured to adjust the production process based on the measurements.
